**Europäisches Patentamt**

**European Patent Office**

**Office européen des brevets**

(19)

(11) Veröffentlichungsnummer: **0 243 358**
**B1**

(12)

# EUROPÄISCHE PATENTSCHRIFT

(45) Veröffentlichungstag der Patentschrift:
**31.05.89**

(21) Anmeldenummer: **86900121.4**

(22) Anmeldetag: **12.12.85**

(86) Internationale Anmeldenummer:
**PCT/EP 85/00696**

(87) Internationale Veröffentlichungsnummer:
**WO 86/03689 (03.07.86 Gazette 86/14)**

(51) Int. Cl.⁴: **B 01 D 53/00**

(54) **VERFAHREN UND VORRICHTUNG ZUM REINIGEN LÖSUNGSMITTELBELASTETER ABLUFT.**

(30) Priorität: **22.12.84 DE 3447274**

(43) Veröffentlichungstag der Anmeldung:
**04.11.87 Patentblatt 87/45**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**DE-A-3 227 678**

**Vatten, Band 35, no. 2, L. Silakoski: "Vattenrening av Problematiska Avloppsvatten", pp. 138-142
Chemical Abstracts, Band 78, 4. Juni 1973, Columbus, Ohio (US), zusammenfassung Nr. 138152t**

(73) Patentinhaber: **Menzolit GmbH, Bahnhofstrasse 31, D-7527 Kraichtal- Menzingen (DE)**

(72) Erfinder: **HOFFMANN, Rainer, Blumenstr. 7, D-7527 Kraichtal- Menzingen (DE)**
Erfinder: **HANISCH, Günter, Burgstr. 65, D-7527 Kraichtal- Menzingen (DE)**

(74) Vertreter: **Lempert, Jost, Dr.rer.nat., Patentanwälte Dr. Ing. Hans Lichti Dipl.- Ing. Heiner Lichti Dipl.- Phys. Dr.rer.nat. Jost Lempert Durlacher Strasse 31 Postfach 410760, D-7500 Karlsruhe 41 (DE)**

EP 0 243 358 B1

## Beschreibung

Die Erfindung betrifft ein Verfahren zum Reinigen von mit bei der Kunststoffverarbeitung auftretenden Dämpfen synthetischer Lösungsmittel, insbesondere mit Styrol, belasteter Abluft, dadurch gekennzeichnet, daß die Luft aus dem belasteten Raum abgesaugt, befeuchtet und durch einen Filter aus Mikroorganismen aufweisende Rinde geleitet wird, der auf einen Wert über Zimmertemperatur temperiert wird.

Die Erfindung bezieht sich auf das Reinigen von mit Dämpfen synthetischer Lösungsmittel belasteter Abluft, wie sie bei der Kunststoffverarbeitung anfällt und, wenn sie nicht gereinigt wird, zur einer erheblichen Belastung der Umwelt führen kann.

Belastete Ablauft, wie in Form eines Gemischs aus Monostyrol und/oder Methylenclorid und Luft tritt insbesondere bei der Herstellung und Verarbeitung von glasfaserverstärkten Kunststoffen auf der Basis von ungesättigten Polyesterharzen auf. Die Abluft verteilt sich in den Arbeitsräumen und muß abgesaugt und gereinigt werden, bevor sie ins Freie abgegeben werden kann.

Bekannt ist styrolbelastete Ablauf durch physikalisches Absorbieren des Styrols und zwar speziell an Aktivkohlefiltern zu reinigen. Die verbrauchte Aktivkohle wird beispielsweise mittels Wasserdampf regeneriert, aus dem sodann das Styrol chemisch abgetrennt wird. Dieses bekannte Verfahren der Abluftreinigung und die hierfür erforderlichen apparativen Einrichtungen sind teuer. Zum einen sind die Materialkosten der Aktivkohle relativ hoch. Zum anderen ist ein häufiges Regenerieren der Aktivkohle erforderlich, deren Durchführung kostspielig ist, insbesondere wegen des erforderlichen Wasserdampfs, dessen Erzeugung und Prozeßführung besonders apparative Einrichtungen notwendig machen. Bei einem anderen Verfahren zur Reinigung styrolbelasteter Abluft wird das Styrol oxydiert. Dieses Verfahren ist besonders aufwendig und damit ebenfalls recht teuer.

Es ist weiter bekannt, zur Geruchsbeseitigung bei Öl- oder Fettherstellung in Tierkörperbeseitigungsanlagen, die entstehenden natürlichen Geruchsstoffe durch biologische Filter aus Kompost od.dgl. zu reduzieren.

Vatten, Band 35, Nr. 2 L. Silakosi: "Vattenrening av Problematiska Avloppsvatten", Seiten 138 - 142 betrifft die Reinigung von Abwässern, insbesondere der Forstindustrie, aber auch anderer problematischer, durch natürliche Stoffe belasteter Abwässer, wie Abwässer aus Schlachtereien. Vatten geht davon aus, daß bei natürlichen Verwesungsprozessen unbequeme Gerüche durch bei diesen Verwesungsprozessen sich entwickelnde Dämpfe entstehen. Die Entgegenhaltung weist weiter darauf hin, daß in der Natur diese übelriechenden Verbindungen von Mikroorganismen, die im Boden leben, abgebaut werden, so daß z. B. bei Kadavern, die im Boden vergraben sind, keine Gerüche auftreten. Diese Beobachtung wird auf Abwasserreinigungsverfahren für Abwässer der Forstindustrie, von Schlachtereien od.dgl. übertragen, bei denen ebenfalls aufgrund der natürlichen-biologischen sich abbauenden Substanzen in natürlicher Weise übelriechende oder giftige Dämpfe entstehen. Da das bekannte Verfahren zur Abwasserreinigung die Durchführung von Luft durch den Filter für die Abwässer benötigt und diese Luft dann natürlich entstandene übelriechende oder giftige Dämpfe aufnimmt, so ergibt sich, daß auch die Luft gereinigt werden muß. Dies geschieht im Hinblick auf die genannte Beobachtung, daß bei im Boden vergrabenen Kadavern keine Gerüche entstehen, da die übelriechenden Verbindungen von im Boden lebenden Mikroorganismen abgebaut werden, dadurch, daß ebenso wie das Abwasser, auch die Luft durch eine Borkenschicht geführt wird. Es ist ganz natürlich, daß im natürlichen Naturkreislauf entstehende Stoffe und damit übelriechende und giftige natürliche Dämpfe auch von der Natur wieder abgebaut werden können.

Der Erfindung liegt die Aufgabe zugrunde, ein Verfahren und eine Vorrichtung der eingangs genannten Art zu schaffen, die eine verfahrensmäßig und apparativ einfache und damit kostengünstigere Reinigung von mit Dämpfen synthetischer Lösungsmitteln belasteter Abluft ermöglichen.

Die Aufgabe wird erfindungsgemäß dadurch gelöst, daß die Luft aus dem belasteten Raum abgesaugt, befeuchtet und durch einen Filter aus Mikroorganismen aufweisende Rinde geleitet wird, der auf einen Wert über Zimmertemperatur temperiert wird. Es hat sich überraschenderweise herausgestellt, daß auch die synthetischen Lösungsmittel durch einen solchen Filter derart weitgehend entfernt werden, daß sie im Filter durch Bakterien und auch Pilzkulturen zersetzt und abgebaut werden. Es wurde nämlich festgestellt, daß die Filtermasse selbst kaum nicht zersetzte Lösungsmittel etc. aufweist.

Vorteilhaft hierbei ist, daß der Filter billiger ist als die zur physikalischen Absorption bisher verwendeten Aktivkohlefilter und daß der Biofilter ferner das sorbierte Styrol zumindest zum Teil unter Wirkung der auf den Filter vorhandenen Mikroorganismen abbaut, so daß er weniger schnell verbraucht wird. Es ergeben sich relativ hohe Standzeiten. Eine Regeneration durch einfache Belüftung ist möglich. Die Kosten einer Regeneration mit Wasserdampf entfallen. Der endgültig verbrauchte billige Filter wird schließlich durch einen neuen ersetzt. Der verbrauchte Filter kann sodann in herkömmlicher Weise als Müll entsorgt werden.

Das erfindungsgemäße Verfahren kann in einer relativ einfachen Vorrichtung durchgeführt werden, die einen Durchströmungsbehälter aufweist, in dem ein mit Mikroorganismen besetzte Rinde aufweisender Filter von der zu reinigenden Abluft durchströmbar angeordnet ist, wobei weiterhin ein Ventilator zur Zwangsförderung der Abluft vorgesehen ist, zwischen dem und dem Filter eine Sprüheinrichtung zum Befeuchten der Abluft angeordnet ist, und wobei eine Heizeinrichtung zur Temperierung des Filters vorgesehen ist. Es sind keine Einrichtungen zur Erzeugung und Prozeßführung von Wasserdampf erforderlich.

Bei bevorzugten Ausführungen des erfindungsgemäßen Verfahren ist vorgesehen, daß man als Filter Fichtenrinde verwendet. Mit diesem besonders billigen Material wird ein sehr hoher Reinigungseffekt erzielt. Die Rinde kann unbehandelt oder aber in einer die natürlich vorhandenen Mikroorganismen zu besonders aktivierenden und vermehrenden Weise vorbehandelt, z. B. aufgeschlossen sein.

Vorteilhafterweise verwendet man die Baumrinde in Form von in einer Schüttung angeordneten Körnern, insbesondere Korndurchmesser von 0,5 bis 3 cm. Aufgrund der kugelartigen Packung in der Schüttung ergibt sich eine relativ hohe Oberfläche, ferner ist eine gleichmäßige Belastung und Belüftung des gesamten Filters gewährleistet. Von Vorteil verwendet man die Baumrinde in einem Gemisch mit Faserstoffen, insbesondere Reisig. Reisig dient zur Auflockerung des Filters und trägt zur wirkungsvollen Belüftung bei.

Um den aeroben Abbau des Styrols sowie eventueller anderer organischer Schadstoffe zu unterstützen ist vorgesehen, daß man dem Filter zusätzlich Luft bzw. Sauerstoff zuführt, wobei vorzugsweise schon durch den Filter gereinigte Abluft verwendet wird, die mit der noch belasteten Abluft dem Filter zugeführt wird. Zusätzlich ergibt sich hierdurch schon eine Vorwärmung der belasteten Abluft, und damit sowohl eine Energieersparnis als auch einer verbesserte Effektivität, da die kühlere Abluft über eine geringere Temperaturdifferenz bis zur Arbeitstemperatur erwärmt werden muß.

In bevorzugter Ausführung des Verfahrens ist vorgesehen, daß man die Abluft, bevor sie den Filter durchströmt, von Staub reinigt. Dies ist insbesondere erforderlich, wenn das Verfahren zur Reinigung der styrolbelasteten Abluft aus der Herstellung und Verarbeitung von glasfaserverstärkten Kunststoffen eingesetzt wird. Die betreffende Abluft enthält Glasfaserstaub, die den Filter bereits nach relativ kurzer Betriebszeit zusetzen würde.

Um einen hohen Reinigungseffekt zu erzielen, sind Betriebsbedingungen wünschenswert, die auch optimale Lebensbedingungen der Mikroorganismen gewährleisten. In diesem Sinne ist insbesondere vorgesehen, daß die Temperatur auf etwa 25 bis 35°C gehalten wird. Insbesondere wird der Feuchtegehalt im Filter zwischen 60 bis 80 % gehalten. Die Feuchtigkeit verbessert die Bedingungen für das Wachstum der Mikroorganismen und trägt damit zum Abbau des Styrols und eventueller anderer Schadstoffe bei.

Bei einem Ausführungsbeispiel der erfindungsgemäßen Vorrichtung, die einen Durchströmungsbehälter aufweist, in dem ein von der zu reinigenden Abluft durchströmter Filter angeordnet ist, ist vorgesehen, daß der Filter Baumrinde enthält, die in Form von Körnern mit einem Korndurchmesser zwischen 0,5 und 3 cm vorliegt und die Körner in einer Schüttung angeordnet sind, wobei die Schüttung aus mehreren in Strömungsrichtung hintereinander geschalteten Schichten zusammengesetzt ist, die sich in der Korngröße der darin enthaltenen Körner unterscheiden. Insbesondere können dabei benachbarte Schichten alternierend grob - bzw. feinkörnig - ausgebildet sein.

Zur exakten Einstellung der Betriebstemperatur ist vorgesehen, daß der Durchströmungsbehälter einen Temperaturfühler und eine regelbare Heizeinrichtung für den Filter aufweist, mit denen eine Betriebstemperatur zum Ausfiltern konstant einstellbar ist. Vorzugsweise ist die Beheizung als eine den Filter durchlaufende Heizschlange ausgebildet.

Durch das Gebläse kann die Verweilzeit entsprechender Kapazität des Filters und der Schadstoffbelastung der Abluft geregelt werden. Dies ist auch zur Vermeidung des Austrocknens des Filters sinnvoll.

Bei einem bevorzugten Ausführungsbeispiel der erfindungsgemäßen Vorrichtung, bei der die zu reinigende Abluft den Filter von unten nach oben durchströmt, ist vorgesehen, daß in dem Durchströmungsbehälter oberhalb des Filters zusätzlich eine Berieselungseinrichtung angeordnet ist. Die Befeuchtung kann auch an anderen geeigneten Stellen, z. B. in die Zuluft durch Dampfzuführung und durch Sprüheinrichtungen erfolgen. Damit läßt sich der Feuchtigkeitsgehalt des Filters einstellen. Vorzugsweise ist hierfür vorgesehen, daß im Inneren des Durchströmungsbehälters im Bereich des Filters ein Feuchtigkeitsfühler angeordnet ist. Dies ermöglicht eine exakte Regelung des Feuchtigkeitsgehalts.

Vorteilhafterweise ist am Boden des Durchströmungsbehälters ein Wasserablauf mit Ventil angeordnet. Dies ermöglicht es, überschüssiges Wasser aus der Berieselungseinrichtung oder etwaige Kondensate aus der Abluft abzuziehen. Ferner schafft diese Ausführung die Möglichkeit, Schadstoffe aus dem Filter während des Betriebs oder in einer Regenerationsphase auszuwaschen. Das Waschmedium, z. B. Wasser, kann aus der Berieselungseinrichtung zugeführt werden.

Weitere Vorteile und Merkmale der Erfindung ergeben sich aus der nachfolgenden Beschreibung, in der ein Ausführungsbeispiel der Erfindung unter Bezugnahme auf die Zeichnung beschrieben ist. Es zeigen:

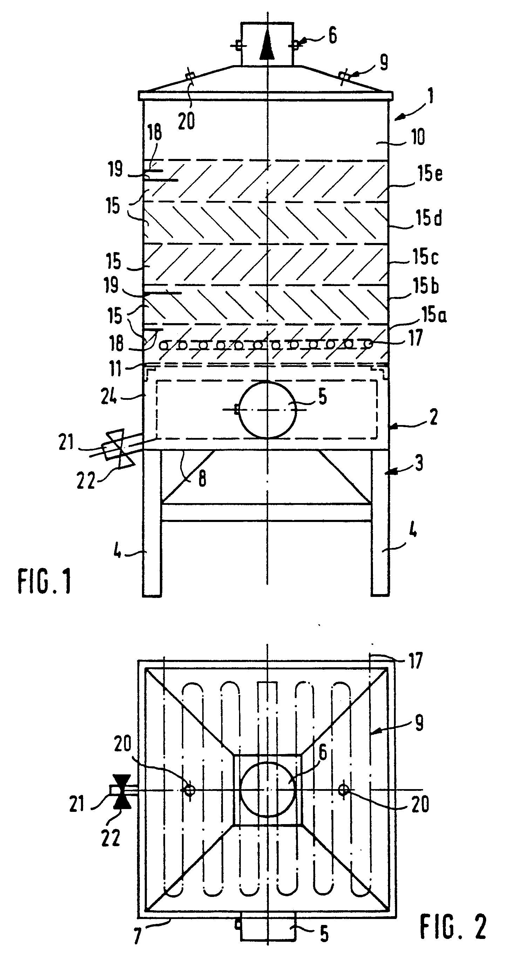

Figur 1    Eine Seitenansicht auf das Ausführungsbeispiel der erfindungsgemäßen Vorrichtung, Innenraum der Vorrichtung teilweise

Figur 2 im Schnitt; und
eine Draufsicht der Vorrichtung der Fig.1.

Das in den Figuren dargestellte Ausführungsbeispiel der erfindungsgemäßen Vorrichtung weist einen als stehende Reinigungssäule 1 ausgebildeten Durchströmungsbehälter mit quadratischer Grundfläche auf. Sie lagert mit ihrem unteren Ende 2 in einem Gestell 3 mit vier Standbeinen 4. Der Durchströmungsbehälter bzw. die Säule 1 weist am unteren Ende 2 einen Einlaßstutzen 5 für die zu reinigende Abluft und am Kopf ein Auslaßstutzen 6 für die gereinigte Abluft auf. Der Einlaßstutzen 5 ist an einer Seitenwand 7 der Säule 1 knapp über dem Boden 8 der Säule angeordnet. Der Auslaßstutzen 6 ist ein Teil eines abnehmbaren Deckels 9, der die obere Abdeckung der Säule 1 der Abdeckung bildet und im Bereich der Längsmittelachse angeordnet ist. Dem Einlaßstutzen ist ein Fördergebläse sowie eine Sprüheinrichtung zur Befeuchtung der Luft vorgeordnet (nicht dargestellt).

Im Innenraum 10 der Säule 1 ist in einer Höhe knapp über dem Einlaßstutzen 5 ein Siebboden 11 eingesetzt, der sich über den gesamten freien inneren Querschnitt der Säule 1 erstreckt. Auf dem Siebboden 11 lagert eine Schüttung 15 aus einem Gemisch von Körnern aus gemahlender Fichtenbaumrinde und Reisig (im einzelnen in den Figuren nicht dargestellt). Die Schüttung 15 füllt den Innenraum 10 der Säule 1 oberhalb des Siebbodens 11 bis zu etwa zwei Drittel der Säulenhöhe.

Die Schüttung 15 ist aus übereinander lagernden diskreten Schichten 15a bis 15e aufgebaut. Aufeinander lagernde Schichten unterscheiden sich in der Korngröße der verwendeten Körner und zwar sind aufeinanderfolgende Schichten in alternierender Ordnung fein- oder grobkörnig ausgebildet. Die Korndurchmesser der verwendeten Körner liegen zwischen 0,5 und 3 cm. Die Schüttung 15 mit den Schichten 15a und 15e bildet einen Filter mit mehreren Filterschichten. Die feinere Fraktion weist dabei Korngrößen von weniger als 1 cm auf und die grobere von mehr als 2 cm auf.

Im Innenraum 10 der Säule 1 ist im Bereich knapp oberhalb des Siebbodens 11 eine Heizschlange 17 in der Schüttung bzw. dem Filter 15 und zwar in der Innenströmungsrichtung der ersten Schicht 15a eingebettet angeordnet. Die Heizschlange 17 ist mit einem nicht dargestellten, außerhalb der Säule 1 angeordneten regelbaren Versorgungsaggregat verbunden. In der Schüttung 15 sind ferner mehrere Temperaturfühler 18 eingesetzt, die mit dem Versorgungsaggregat gekoppelt sind.

Mit dem regelbaren Gebläse in der Zuleitung der Abluft kann neben der Förderung der zu reinigenden Abluft durch die Säule 1 bzw. die Schüttung 15, dem Filter zusätzlich unbelastete Luft oder Sauerstoff von außen her angesaugt und zur Belüftung des Filters 15 in die Zuleitung eingeblasen werden.

An der Innenseite des im wesentlichen dachgiebelförmig ausgebildeten Deckels 9 sind Berieselungsdüsen 20 angebracht, die über Anschlüsse im Deckel 9 mit einem nicht dargestellten Wasserversorgungsaggregat verbunden sind. In den Filter 15 ragen Feuchtigkeitsfühler 19. Die Säule 1 weist im Boden 8 einen Flüssigkeitsablauf 21 mit Kugelventil 22 auf. Hierüber kann das Wasser aus der Berieselungsanlage 20 abgezogen werden.

In einer Seitenwand 23 der Säule 1 im Bereich zwischen Boden 8 und Siebboden 11 ist eine Reinigungsöffnung 24 vorgesehen. Mit der in den Figuren dargestellten Vorrichtung wird das erfindungsgemäße Verfahren folgendermaßen durchgeführt:

Die Säule 1 wird während des Betriebs von unten nach oben mit der zu reinigenden Abluft durchströmt. Die Abluft wird unter Wirkung des Gebläses in die Einlaßstutzen 5 in die Säule eingeführt, durchströmt sodann den Filter 15 und verläßt schließlich die Säule 1 über den Auslaßstutzen 6.

Beim Durchströmen durch die Schüttung 15 werden die Schadstoffe, insbesondere das Styrol, aus der Abluft und der Wirkung des Filters 15 entfernt. Dies erfolgt dadurch, daß Styrol und ähnliche Schadstoffe aus dem Filter nicht nur durch Absorption zurückgehalten, sondern auch zumindest zum Teil unter Wirkung des Filters abgebaut werden, indem das Styrol von den auf der Rinde vorhandenen Mikroorganismen zersetzt wird.

Um einen hohen Reinigungseffekt zu erzielen, ist das Einhalten geeigneter Betriebsbedingungen erforderlich. Die Betriebsbedingungen sind letztlich auch verantwortlich für die Einstellung optimaler Lebensbedingungen der Mikroorganismen.

Die Betriebstemperatur liegt vorzugsweise über Zimmertemperatur. Die Betriebstemperatur wird über die im Filter 15 angeordneten Temperaturfühler 18 gemessen und durch das mit den Fühlern 18 gekoppelte Versorgungsaggregat in Verbindung mit der Heizschlange 17 geregelt. Die Feuchtigkeit des Filters 15 wird zwischen 60 und 80 % gehalten. Sie wird über die Feuchtigkeitsfühler 19 gemessen und durch die Berieselungsanlage 20 eingestellt. Die Regelung erfolgt automatisch.

Die Verweilzeit der Abluft im Filter 15 wird durch den Gasdurchsatz, abhängig von der jeweiligen Schütthöhe des Filters 15 eingestellt. Sie wird entsprechend der Schadstoffbelastung des zu reinigenden Abgases und unter Berücksichtigung des gewünschten Reinigungsgrads gewählt. Der Filter 15 läßt sich ohne technischen Aufwand einfach herstellen. Die Körner können durch Mahlen von Baumrinde erhalten werden. Selbstverständlich kann die Rinde auch einfach gebrochen und stückig eingesetzt werden. Der verbrauchte Filter kann als Müll in herkömmlicher Weise entsorgt werden.

**Patentansprüche**

1. Verfahren zum Reinigen von mit bei der Kunststoffverarbeitung auftretenden Dämpfen synthetischer Lösungsmittel, insbesondere mit Styrol, belasteter Abluft, dadurch gekennzeichnet, daß die Luft aus dem belasteten Raum abgesaugt, befeuchtet und durch einen Filter aus Mikroorganismen aufweisende Rinde geleitet wird, der auf einen Wert über Zimmertemperatur temperiert wird.

2. Verfahren nach Anspruch 1, dadurch gekennzeichnet, daß als Filter Fichtenrinde verwendet wird.

3. Verfahren nach Anspruch 2, dadurch gekennzeichnet, daß man die Baumrinde in Form von in einer Schüttung angeordneten Körnern, insbesondere mit Korndurchmesser von 0,5 bis 3 cm verwendet.

4. Verfahren nach einem der vorangehenden Ansprüche, dadurch gekennzeichnet, daß man die Baumrinde in einem Gemisch mit Faserstoffen, insbesondere Reisig verwendet.

5. Verfahren nach einem der vorangehenden Ansprüche, dadurch gekennzeichnet, daß die Abluft, bevor sie den Filter durchströmt, vom Staub gereinigt wird.

6. Verfahren nach einem der vorangehenden Ansprüche, dadurch gekennzeichnet, daß dem Filter zusätzlich unbelastete Luft oder Sauerstoff zugeführt wird.

7. Verfahren nach Anspruch 6, dadurch gekennzeichnet, daß durch den Filter gereinigte Abluft diesem wieder gemeinsam mit ungereinigter Abluft zugeführt wird.

8. Verfahren nach einem der vorangehenden Ansprüche, dadurch gekennzeichnet, daß die Temperatur auf etwa 25 - 35°C gehalten wird.

9. Verfahren nach einem der vorangehenden Ansprüche, dadurch gekennzeichnet, daß der Feuchtegehalt im Filter gemessen und die Befeuchtung der dem Filter zugeführten Abluft derart geregelt wird, daß der Feuchtegehalt im Filter zwischen 70 bis 80 % gehalten wird.

10. Vorrichtung zum Reinigen belasteter Luft, mit einem Durchströmbehälter, in dem ein mit Mikroorganismen besetzte Rinde aufweisender Filter von der zu reinigenden Luft durchströmbar angeordnet ist, dadurch gekennzeichnet, daß ein Ventilator zum Absaugen der Abluft vorgesehen ist, daß zwischen Ventilator und Filter eine Sprüheinrichtung (20) zum Befeuchten der Abluft angeordnet ist und daß eine Heizeinrichtung (17, 18) zur Temperierung des Filters (1, 15) vorgesehen ist.

11. Vorrichtung nach Anspruch 10, dadurch gekennzeichnet, daß der Filter (15) Fichtenrinde enthält.

12. Vorrichtung nach Anspruch 11, dadurch gekennzeichnet, daß die Baumrinde in Form von Körnern mit Korndurchmesser zwischen 0,5 bis 3 cm vorliegt und die Körner in einer Schüttung (15) angeordnet sind.

13. Vorrichtung nach Anspruch 12, dadurch gekennzeichnet, daß die Schüttung aus mehreren in Strömungsrichtung hintereinander geschalteten Schichten (15a) bis (15e) zusammengesetzt ist, die sich in der Korngröße der darin enthaltenen Körner derart unterscheiden, daß die grobe Fraktion Partikel von mehr als 2 cm Durchmesser und die feine Fraktion Teilchen von weniger als 1 cm Durchmesser aufweist.

14. Vorrichtung nach einem der Ansprüche 10 bis 13, dadurch gekennzeichnet, daß die Heizeinrichtung einen Temperaturfühler (18) und einen regelbaren Heizkörper (17) für den Filter (15) aufweist.

15. Vorrichtung nach Anspruch 14, dadurch gekennzeichnet, daß die Heizeinrichtung eine den Filter (15, 15a) durchlaufende Heizschlange (17) aufweist.

16. Vorrichtung nach Anspruch 14 oder 15 in Verbindung nach Anspruch 13, dadurch gekennzeichnet, daß der Heizkörper (17) im Bereich der in Strömungsrichtung ersten Schicht (15a) angeordnet ist.

17. Vorrichtung nach einem der Ansprüche 10 bis 16, dadurch gekennzeichnet, daß in die Abluftzuleitung vor dem Filter (15) ein Staubabscheider eingeschaltet ist.

18. Vorrichtung nach einem der Ansprüche 10 bis 17, bei der die zu reinigende Abluft den Filter von unten nach oben durchströmt, dadurch gekennzeichnet, daß in dem Durchströmungsbehälter (1) oberhalb des Filters (15) eine Berieselungseinrichtung (20) angeordnet ist.

19. Vorrichtung nach Anspruch 18, dadurch gekennzeichnet, daß im Innern (10) des Durchströmungsbehälters (1) im Bereich des Filters (15) ein Feuchtigkeitsfühler (19) angeordnet ist.

**Claims**

1. Method for purifying exhaust air laden with the vapours of synthetic solvents, particularly styrene occurring during the processing of plastics, characterized in that the air is sucked out of the laden room or area, moistened and passed through a filter of bark containing microorganisms and which is thermostatically controlled to a value above room temperature.

2. Method according to claim 1, characterized in that spruce bark is used as the filter.

3. Method according to claim 2, characterized in that the bark is used in the form of particles arranged in a bed and in particular having a particle diameter of 0.5 to 3 cm.

4. Method according to one of the preceding claims, characterized in that the bark is used in a mixture with fibrous materials, particularly brushwood.

5. Method according to one of the preceding claims, characterized in that the dust is cleaned out of the exhaust air before the latter passes through the filter.

6. Method according to one of the preceding claims, characterized in that the filter is additionally supplied with unladen air or oxygen.

7. Method according to claim 6, characterized in that exhaust air purified by the filter is again supplied thereto together with unpurified exhaust air.

8. Method according to one of the preceding claims, characterized in that the temperature is kept at approximately 25 to 35°C.

9. Method according to one of the preceding claims, characterized in that the moisture content in the filter is measured and the moistening of the exhaust air supplied to the filter is regulated in such a way that the moisture content in the filter is kept at between 70 and 80°C.

10. Device for purifying laden air with a trough-flow container, in which the air to be purified flows through the filter in the form of bark having microorganisms, characterized in that a fan is provided for sucking off the exhaust air, that between the fan and the filter is arranged a spraying mechanism (20) for moistening the exhaust air and that a heating means (17, 18) is provided for the thermostatic control of filter (1, 15).

11. Device according to claim 10, characterized in that the filter (15) contains spruce bark.

12. Device according to claim 11, characterized in that the bark is in the form of particles with a particle diameter between 0.5 and 3 cm and the particles are arranged in a bed (15).

13. Device according to claim 12, characterized in that the bed is formed by several layers (15a to 15e) successively arranged in the flow direction and which differ as regards the particle size of the particles contained therein, so that the coarse fraction has particles with a diameter greater than 2 cm and the fine fraction particles with a diameter of less than 1 cm.

14. Device according to one of the claims 10 to 13, characterized in that the heating mechanism has a temperature sensor (18) and a regulatable heating element (17) for filter (15).

15. Device according to claim 14, characterized in that the heating mechanism has a heating coil (17) passing through the filter (15, 15a).

16. Device according to claims 14 or 15 in conjunction with 13, characterized in that the heating element (17) is arranged in the vicinity of the first layer (15a) in the flow direction.

17. Device according to one of the claims 10 to 16, characterized in that a dust separator is located in the exhust air supply line upstream of filter (15).

18. Device according to one of the claims 10 to 17, in which the exhaust air to be purified flows through the filter from bottom to top, characterized in that a sprinkler (20) is arranged in the through-flow container (1) above filter (15).

19. Device according to claim 18, characterized in that a moisture sensor (19) is arranged in the interior (10) of the though-flow container (1) in the vicinity of filter (15).

**Revendications**

1. Procédé de purification d'air chargé en vapeurs de solvants synthétiques, notamment de styrène, produites lors de la transformation des matières plastiques, caractérisé en ce qu'on aspire l'air hors de l'espace chargé, qu'on l'humidifie et qu'on le conduit à travers un filtre en écorce comportant des micro-organismes, qui est maintenu à une température supérieure à la température ambiante.

2. Procédé selon la revendication 1, caractérisé en ce qu'on utilise comme filtre de l'écorce d'épicéa.

3. Procédé selon la revendication 2, caractérisé en ce qu'on utilise l'écorce d'arbre sous forme de particules disposées en tas, en particulier d'un diamètre de particules de 0,5 à 3 cm.

4. Procédé selon l'une des revendications précédentes, caractérisé en ce qu'on utilise l'écorce d'arbre en mélange avec des matières fibreuses, en particulier du petit bois.

5. Procédé selon l'une des revendications précédentes, caractérisé en ce que l'air d'échappement est dépoussiéré avant de traverser le filtre.

6. Procédé selon l'une des revendications précédentes, caractérisé en ce qu'on amène en outre au filtre de l'air ou de l'oxygène non chargé.

7. Procédé selon la revendication 6, caractérisé en ce que du gaz d'échappement purifié par le filtre est amené de nouveau à celui-ci conjointement à de l'air d'échappement non purifié.

8. Procédé selon l'une des revendications précédentes, caractérisé en ce que la température est maintenue à environ 25 - 35°C.

9. Procédé selon l'une des revendications précédentes, caractérisé en ce qu'on mesure le taux d'humidité dans le filtre et qu'on règle l'humidification de l'air d'échappement amené au filtre de façon à maintenir le taux d'humidité dans le filtre entre 70 et 80 %.

10. Dispositif pour purifier de l'air chargé, comprenant un récipient de passage dans lequel est disposé un filtre comportant de l'écorce garnie de micro-organismes, pouvant être traversé par l'air à purifier, caractérisé en ce qu'un ventilateur est prévu pour l'extraction de l'air d'échappement, que des moyens d'aspersion (20) sont disposés entre le ventilateur et le filtre pour humidifier l'air d'échappement et que des moyens de chauffage (17, 18) sont prévus pour la mise en température du filtre (1, 15).

11. Dispositif selon la revendication 10, caractérisé en ce que le filtre (15) contient de l'écorce d'épicéa.

12. Dispositif selon la revendication 11, caractérisé en ce que l'écorce d'arbre est présente sous forme de particules ayant un diamètre compris entre 0,5 et 3 cm et que les particules sont disposées en tas (15).

13. Dispositif selon la revendication 12, caractérisé en ce que le tas est composé de plusieurs couches (15a) à (15e) disposées les unes à la suite des autres dans le sens d'écoulement, qui diffèrent par la taille des particules qu'elles contiennent, la fraction grossière comportant des particules de plus de 2 cm de diamètre et la fraction fine des particules de moins de 1 cm de diamètre.

14. Dispositif selon l'une des revendications 10 à 13, caractérisé en ce que les moyens de chauffage comportent un capteur de température (18) et un corps de chauffe réglable (17) pour le filtre (15).

15. Dispositif selon la revendication 14, caractérisé en ce que les moyens de chauffage comportent un serpentin chauffant (17) traversant le filtre (15, 15a).

16. Dispositif selon l'une des revendications 14 et 15 en liaison avec la revendication 13, caractérisé en ce que le corps de chauffe (17) est disposé dans la région de la première couche (15a) dans le sens d'écoulement.

17. Dispositif selon l'une des revendications 10 à 16, caractérisé en ce qu'un séparateur de poussière est monté avant le filtre (15) dans la conduite d'amenée de l'air d'échappement.

18. Dispositif selon l'une des revendications 10 à 17, dans lequel l'air d'échappement à purifier traverse le filtre de bas en haut, caractérisé en ce que des moyens d'arrosage (20) sont disposés au-dessus du filtre (15) dans le récipient de passage (1).

19. Dispositif selon la revendication 18, caractérisé en ce qu'un capteur d'humidité (19) est disposé dans la région du filtre (15) à l'intérieur (10) du récipient de passage.

FIG.1

FIG. 2

1